# EUROPÄISCHE PATENTSCHRIFT

(11) **EP 2 969 596 B1**
(45) Veröffentlichungstag und Bekanntmachung des Hinweises auf die Patenterteilung: **24.10.2018**
(21) Anmeldenummer: 14700280.2
(22) Anmeldetag: 10.01.2014
(51) Int. Cl.: B60C 9/20

(54) **FAHRZEUGLUFTREIFEN**
VEHICLE PNEUMATIC TIRE
PNEUMATIQUE DE VÉHICULE

(30) Priorität: 12.03.2013 DE 102013102430
(43) Veröffentlichungstag der Anmeldung: 20.01.2016
(73) Patentinhaber: Continental Reifen Deutschland GmbH, 30165 Hannover (DE)
(72) Erfinder: FRIES, Volkmar, 30900 Wedemark (DE); GEHLAUF, Matthias, 31319 Sehnde (DE); KEATHLEY, Alexis, 30163 Hannover (DE)
(74) Vertreter: Finger, Karsten
(86) Internationale Anmeldenummer: PCT/EP2014/050342
(87) Internationale Veröffentlichungsnummer: WO 2014/139690

(56) Entgegenhaltungen:
- EP-A1- 0 655 352
- EP-A2- 0 143 651
- EP-A2- 0 342 644
- WO-A1-2012/164442
- "POLYGONALLY PREFORMED STEEL ELEMENTS", RESEARCH DISCLOSURE, MASON PUBLICATIONS, HAMPSHIRE, GB, Nr. 363, 1. Juli 1994 (1994-07-01), Seiten 359-365, XP000461309, ISSN: 0374-4353

## Beschreibung

Die Erfindung betrifft einen Fahrzeugluftreifen in Radialbauart, insbesondere einen Nutzfahrzeugreifen, mit einem Gürtelpaket aus wenigstens drei Lagen, nämlich zwei Arbeitslagen und einer radial innen in Bezug auf die Arbeitslagen angeordneten Sperrlage, wobei jede dieser Gürtellage in Elastomer eingebettete Festigkeitsträger aus Stahlkord aufweist, die in jeder Gürtellage jeweils parallel zueinander und beabstandet voneinander angeordnet sind, wobei die Stahlkorde der Sperrlage die Konstruktion 3 x Filamentdurchmesser aufweisen.

Ein derartiger Fahrzeugluftreifen ist aus der EP 0 655 352 A1 sowie aus der EP 0 143 651 A2 bekannt.

Nutzfahrzeugreifen mit einem Gürtel, welcher zwei Arbeitslagen und eine Sperrlage aufweist, sind dem Fachmann bekannt. Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage" oder "Schutzlage", abgedeckt.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Zudem wird durch die Sperrlage die Widerstandsfähigkeit gegen Durchstoßverletzungen des Reifenunterbaus von radial außen nach radial innen maßgeblich erhöht. In mehreren Ländern, u.a. in der USA in der FMVSS 119, ist ein entsprechender Test festgelegt und die Erfüllung eines definierten Mindestwerts eine der Voraussetzung für den Verkauf und den Betrieb von Reifen.
Dieser Test ist eine statische Prüfung der Reifenkarkassenfestigkeit am Fahrzeugluftreifen gegenüber penetrierenden Fahrbahnhindernissen wie beispielsweise Bordsteinschwellen mittels ein- oder durchdrückendem Stahldorn.

Die Stahlkorde der beiden Arbeitslagen weisen einen typischerweise gleichen Winkel zwischen 15° und 30° in Bezug auf die Reifenumfangsrichtung auf, wobei die Stahlkorde der einen Arbeitslage gegenläufig zu den Stahlkorden der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung.

Die 4. Gürtellage weist Stahlkorde auf, welche üblicherweise einen Winkel zwischen 15° und 30° mit der Umfangsrichtung einschließen. Die 4. Gürtellage hat die Funktion einer Schutzlage für die beiden darunter liegenden Arbeitslagen, indem sie eine Barriere für Steine oder andere Gegenstände darstellt, die durch das Laufstreifenpaket dringen könnten.

Es ist zum Beispiel weiterhin bekannt, für die Sperrlage Stahlkorde der Konstruktion 3x0,20 + 6x0,35 zu verwenden. Dieser Stahlkord weist einen Kernstrang aus 3 miteinander verdrehten Stahlfilamenten des Durchmessers von 0,20 mm auf, welche von 6 Filamenten des Durchmessers von 0,35 mm umgeben sind.

Hierdurch ergibt sich eine Korddurchmesser von 1,14 mm und als gummierte Lage eine Dicke von etwa 1,65 mm. Diese Korde sind typischerweise in einer Dichte von 30 bis 60 ends per decimeter (EPDM) in der Sperrlage angeordnet.

Man ist immer bestrebt, den Fahrzeugluftreifen hinsichtlich seiner Haltbarkeit zu verbessern und, wenn zusätzlich möglich, dessen Gestehungskosten zu senken.

Der Erfindung liegt demnach die Aufgabe zugrunde, einen Nutzfahrzeugreifen der eingangs genannten Art mit einem wenigstens dreilagigen Gürtelpaket derart auszuführen, dass dessen Haltbarkeit verbessert ist, dass dessen Gestehungskosten gesenkt sind sowie dass die in der FMVSS vorgeschriebene Penetrationsprüfung erfüllt wird.

Gelöst wird die Aufgabe erfindungsgemäß dadurch, dass die Stahlkorde in der Sperrlage einen Filamentdurchmesser im Bereich von 0,42 bis 0,45 mm aufweisen und in einer Stahlkord-Dichte von 50 bis 80 pro Dezimeter (EPDM) angeordnet sind.

Es ist ein Nutzfahrzeugreifen mit einem wenigstens dreilagigen Gürtel geschaffen, dessen Sperrlage hinsichtlich ihres Beitrages zur Erfüllung der in der FMVSS vorgeschriebenen Penetrationsprüfung und hinsichtlich ihrer Haltbarkeit verbessert ist sowie in den Gestehungskosten gesenkt ist.

Die Festigkeitsträgerkonstruktion 3 x FD, wobei FD zwischen 0,42 mm - 0,45 mm liegt, beschreibt einen Festigkeitsträger, der aus 3 Filamenten besteht, die miteinander verdreht sind. Jedes Filament hat hierbei den näherungsweise_gleichen Durchmesser (FD), der in dem Bereich von 0,42 mm bis 0,45 mm liegt. Jedes Filament weist einen in etwa runden Querschnitt auf.
In der Sperrlage des erfindungsgemäßen Reifens ist in etwa die gleiche Menge an Stahlkord wie in der Sperrlage des Standes der Technik angeordnet, jedoch ist die Stahlmenge anders verteilt: jeder Kord weist eine geringere Stahlmenge, jedoch bei größerem Querschnitt der Filamente auf, während die Korddichte pro Flächeneinheit erhöht ist.
Durch die erhöhte Korddichte wird bei einer Penetration durch von außen eindringende Fremdkörper eine gleichmäßigere Beanspruchung der einzelnen Korde erreicht, wodurch eine höhere spezifische Widerstandsfähigkeit bei der Penetrationsprüfung nach FMVSS im Vergleich zu Ausführungen nach dem Stand der Technik erzielt wird.
Durch den höheren Filamentdurchmesser wird eine bessere Schnittbeständigkeit der einzelnen Filamente erreicht wodurch die spezifische Widerstandsfähigkeit weiter gesteigert wird.

Die vorgeschlagene Kordkonstruktion 3 x FD weist im Vergleich zu Konstruktionen des Standes der Technik mit vergleichbarem Korddurchmesser und vergleichbaren Filamentdurchmessern eine besonders günstige Volumenausnutzung, d.h. Relation von Filamentvolumen zu Kordvolumen, und damit besonders günstige Wirtschaftlichkeit auf. Kordkonstruktionen des Standes der Technik mit vergleichbaren Filamentdurchmessern und vergleichbarer Festigkeit weisen einen größeren Korddurchmesser auf.

Diese Ausführung ist insbesondere für Nutzfahrzeugreifen mit Load Index größer als 132 vorteilhaft, da die benötigte Steifigkeit und Festigkeit für diese Reifenkategorie erreicht wird.

Zweckmäßig ist es, wenn die Stahlkorde der Sperrlage aus Stahl der Festigkeitsklasse HT oder höher bestehen, wodurch eine möglichst hohe Festigkeit pro Kordvolumen erreicht ist.

Die folgende Tabelle zeigt Kordkonstruktionen, die in der Sperrlage eines erfindungsgemäßen Fahrzeugluftreifens eingesetzt werden (Zeilen 3a - 4b) im Vergleich zu Korden in Sperrlagen des Standes der Technik (Zeilen 1a - 2b).

**Tabelle**

| | Kordkonstruktion | Außendurchmesser des Kordes (in mm) | EPDM | Kord zu Kord-Abstand (in mm) | Spezifisches Kordvolumen (in %) bezogen auf 1a |
|---|---|---|---|---|---|
| 1a | 3x0,20+6x0,35 | 1,13 | 60 | 0,54 | 100 |
| 1b | 3x0,20+6x0,35 | 1,13 | 34 | 1,81 | 57 |
| 2a | 3x0,40 | 0,92 | 78,5 | 0,35 | 74 |
| 2b | 3x0,40 | 0,92 | 65 | 0,61 | 61 |
| 3a | 3x0,42 | 0,97 | 76 | 0,35 | 78 |
| 3b | 3x0,42 | 0,97 | 60 | 0,70 | 62 |
| 4a | 3x0,45 | 1,04 | 72 | 0,35 | 85 |
| 4b | 3x0,45 | 1,04 | 52 | 0,88 | 62 |

Zu jeder Kordkonstruktion ist der Außendurchmesser dieses Kordes, dessen Anordnungsdichte in der Sperrlage, der sich hieraus ergebende Kord zu Kord-Abstand sowie das spezifische Kordvolumen, bezogen auf den Referenzkord der Zeile 1a, angegeben.

Durch einen geringeren Korddurchmesser und somit einer geringeren Lagendicke sind geringere Materialkosten der Sperrlage erreicht. Gleichzeitig ist eine geringere_Kord zu Kordbeabstandung vorteilhaft, siehe beispielsweise Ausführungen 4a und 4b im Vergleich zu Stand der Technik 1a und 1b. Eine noch dichtere Abdeckung - höhere EPDM-Zahl - würde zwar eine weiterhin verbesserte Schutzwirkung erzeugen, jedoch verbliebe zu wenig Gummi zwischen den Korden, welches nachteilig zu einer hohen Dehnung bei gegebener äußeren Verformung führen würde.

Weitere Merkmale, Vorteile und Einzelheiten der Erfindung werden nun anhand der Zeichnungen, die schematisch ein Ausführungsbeispiel darstellen, näher beschrieben. Dabei zeigen die
Fig.1 einen Teilquerschnitt durch die eine Hälfte eine Fahrzeugluftreifens im Bereich des Gürtels und des Laufstreifens;
Fig. 2 einen Querschnitt durch einen Stahlkord der Sperrlage des Reifens der Fig. 1;
Fig. 3 eine dreidimensionale Ansicht des Stahlkordes der Fig. 2.

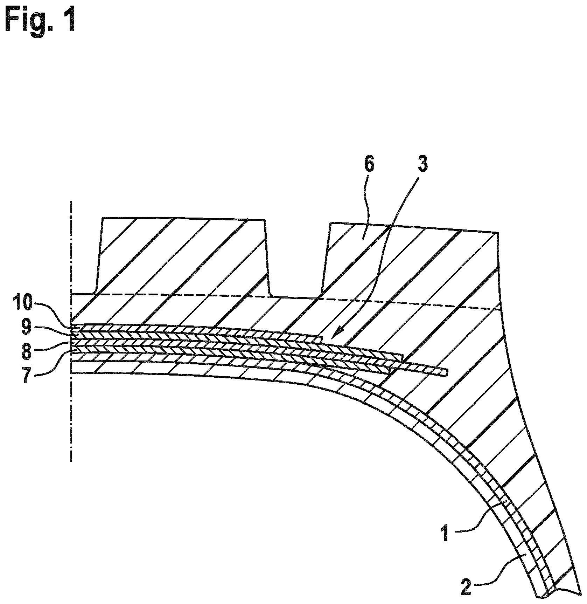

Fig. 1 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlkorden als Festigkeitsträgern, einer luftdichten Innenschicht 2, einem mehrlagigen Gürtelpaket 3 und einem profilierten Laufstreifen 6.

Das Gürtelpaket 3 weist vier Gürtellagen 7, 8, 9 und 10 auf, wobei die vierte, radial äußerste Gürtellage die geringste Breite von allen Lagen aufweist und die sogenannte Schutzlage 10 bildet. Die erste Gürtellage ist die sogenannte Sperrlage 7, die zweite Gürtellage und die dritte Gürtellage sind die sogenannten Arbeitslagen 8, 9. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann ferner gleich breit wie die dritte Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlkord, wobei die Stahlkorde parallel zueinander und beabstandet voneinander angeordnet sind.

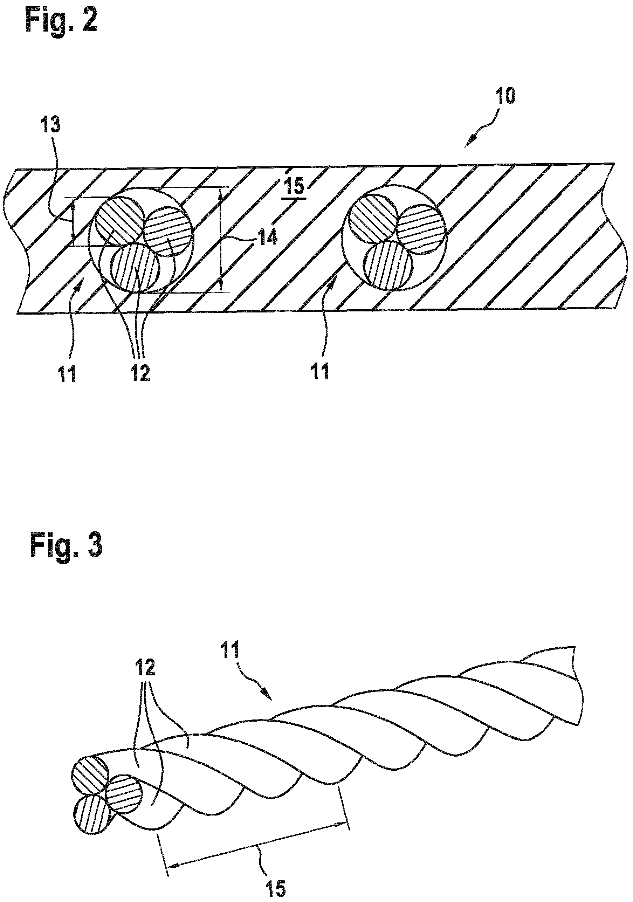

Die Fig. 2 zeigt einen Querschnitt durch die Sperrlage 7 des Reifens der Fig. 1. Die Sperrlage 7 weist Stahlkorde 11 der Festigkeitsklasse HT auf, welche in eine Gummimischung 15 eingebettet sind. Die Stahlkorde 11 sind parallel zueinander und beabstandet voneinander in dieser Sperrlage 7 angeordnet. Die Stahlkorde 11 weisen die Konstruktion 3 x Filamentdurchmesser (FD) auf, wobei der Filamentdurchmesser 13 (FD) 0,36 mm - 0,45mm beträgt. Die Stahlkorde sind in einer Dichte von 50 - 110 ends per decimeter (EPDM) in der Sperrlage 7 angeordnet.

Die Fig. 3 zeigt eine dreidimensionale Ansicht des Stahlkordes der Fig. 2 der Konstruktion 3 x FD 13.

### Bezugszeichenliste

### (Teil der Beschreibung)

- 1: Karkasse
- 2: Innenschicht
- 3: Gürtelpaket
- 6: Laufstreifen
- 7: Sperrlage (1. Gürtellage)
- 8: Arbeitslage (2. Gürtellage)
- 9: Arbeitslage (3. Gürtellage)
- 10: Schutzlage (4. Gürtellage)
- 11: Stahlkord
- 12: Filament
- 13: Filamentdurchmesser
- 14: Korddurchmesser
- 15: Schlaglänge

## Patentansprüche

1. Fahrzeugluftreifen in Radialbauart, insbesondere einen Nutzfahrzeugreifen, mit einem Gürtelpaket (3) aus wenigstens drei Lagen (7, 8, 9), nämlich zwei Arbeitslagen (8, 9) und einer radial innen in Bezug auf die Arbeitslagen (8, 9) angeordneten Sperrlage (7), wobei jede dieser Gürtellage (7, 8, 9) in Elastomer eingebettete Festigkeitsträger aus Stahlkord aufweist, die in jeder Gürtellage (7, 8, 9) jeweils parallel zueinander und beabstandet voneinander angeordnet sind, wobei die Stahlkorde (11) der Sperrlage (7) die Konstruktion 3 x Filamentdurchmesser (13) aufweisen, **dadurch gekennzeichnet, dass** die Stahlkorde (11) in der Sperrlage (7) einen Filamentdurchmesser im Bereich von 0,42 bis 0,45 mm aufweisen und in einer Stahlkord-Dichte von 50 bis 80 pro Dezimeter (EPDM) angeordnet sind.

2. Fahrzeugluftreifen nach Anspruch 1, **dadurch gekennzeichnet, dass** die Stahlkorde (11) der Sperrlage (7) aus Stahl der Festigkeitsklasse High Tensile (HT) oder höher bestehen.

## Claims

1. Pneumatic vehicle tyre of a radial construction, in particular a tyre for a commercial vehicle, having a belt assembly (3) made up of at least three plies (7, 8, 9), specifically two working plies (8, 9) and a blocking ply (7) arranged radially on the inside in relation to the working plies (8, 9), each of these belt plies (7, 8, 9) comprising reinforcing elements of steel cord embedded in elastomer which are respectively arranged in each belt ply (7, 8, 9) parallel to one another and spaced apart from one another, the steel cords (11) of the blocking ply (7) having the construction 3 x filament diameter (13), **characterized in that** the steel cords (11) in the blocking ply (7) have a filament diameter in the range from 0.42 to 0.45 mm and are arranged in a steel cord density of 50 to 80 per decimetre (EPDM).

2. Pneumatic vehicle tyre according to Claim 1, **characterized in that** the steel cords (11) of the blocking ply (7) consist of steel of the strength class High Tensile (HT) or higher.

## Revendications

1. Pneumatique de véhicule de construction radiale, en particulier pneumatique pour véhicules utilitaires, comprenant un ensemble de ceinture (3) constitué d'au moins trois couches (7, 8, 9), à savoir deux couches de travail (8, 9) et une couche de blocage (7) disposée radialement à l'intérieur par rapport aux couches de travail (8, 9), chacune de ces couches de ceinture (7, 8, 9) présentant des renforts en câbles d'acier noyés dans de l'élastomère, qui sont à chaque fois disposés parallèlement les uns aux autres et à distance les uns des autres dans chaque couche de ceinture (7, 8, 9), les câbles d'acier (11) de la couche de blocage (7) présentant une construction de type 3 x diamètre du filament (13), **caractérisé en ce que** les câbles d'acier (11) dans la couche de blocage (7) présentent un diamètre de filament de l'ordre de 0,42 à 0,45 mm et sont disposés avec une densité des câbles d'acier de 50 à 80 par dm (EPDM).

2. Pneumatique de véhicule selon la revendication 1, **caractérisé en ce que** les câbles d'acier (11) de la couche de blocage (7) se composent d'acier de classe de résistance élevée High Tensile (HT) ou supérieure.
